(19) Europäisches Patentamt
European Patent Office
Office européen des brevets

(11) Publication number: **0 557 936 A1**

# (12) EUROPEAN PATENT APPLICATION

(21) Application number: **93102786.6**

(22) Date of filing: **23.02.93**

(51) Int. Cl.$^5$: **C07F 9/553**, A61K 31/675, C07F 9/572

(30) Priority: **27.02.92 IT MI920437**

(43) Date of publication of application: **01.09.93 Bulletin 93/35**

(84) Designated Contracting States: **BE CH DE DK ES FR GB IT LI NL PT**

(71) Applicant: **MAGIS FARMACEUTICI S.p.A.**
**Via Cacciamali 34/36/38**
**I-25128 Brescia(IT)**

(72) Inventor: **Moroni, Enzo**
**Via Taramelli 7**
**I-25125 Brescia(IT)**

(74) Representative: **Gervasi, Gemma, Dr. et al**
**NOTARBARTOLO & GERVASI Srl 33, Viale Bianca Maria**
**I-20122 Milano (IT)**

(54) **Amidic derivatives of (R)-glycerophosphoryl-(S)-serine or of its diacyl derivative, process for their preparation and relative pharmaceutical compositions for the improvement of the learning processes.**

(57) Amidic derivatives of (R)-glycerophosphoryl-(S)-serine or of its diacyl derivative, a process for their preparation, and relative pharmaceutical compositions, containing said derivatives as their active principle for the improvement of learning and memory processes.

EP 0 557 936 A1

## FIELD OF THE INVENTION

The present invention concerns amidic derivatives of (R)-glycerylphosphoryl-(S)-serine and of its diacyl derivative, a process for their preparation and pharmaceutical compositions containing the same derivatives as active principles for enhancing learning and memory processes.

## STATE OF THE ART

L-glycerylphosphorylserine is a product showing antidislipidemic activity and is also used for the treatment of the Alzheimer disease and for the treatment of the brain aging processes (USP 4,950,776), and can therefore be also utilized for enhancing the learning and memory processes.

Another derivative showing antiamnesic activity is N(4-phenylbutanoyl-hydroxy)-prolyl-pyrrolidine described in EP 268,281.

Another derivative showing antiamnesic activity is (S)-3-formylamino-epsilon-caprolactam described in European patent applications 462949 and 462948.

## THE PRESENT INVENTION

Object of the present invention are the amidic derivatives of (R)-glycerylphosphoryl-(S)-serine and of its diacyl derivative having general formula (I):

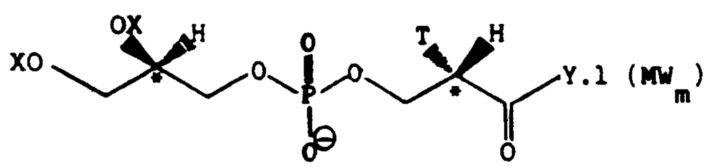

(I)

wherein the asterisk indicates the presence of an asymmetric carbon atom and Y is selected from:

A)

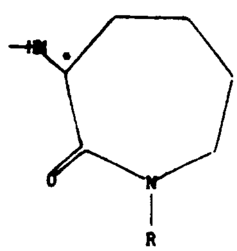

wherein the asterisk indicates the presence of an asymmetric carbon atom and R = H, $CH_2CO_2Me$, $CH_2CONH_2$, $CH_2CH_2OH$, $CH_2CHO$; and

B)

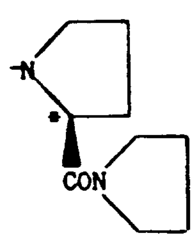

wherein the asterisk indicates the presence of an asymmetric carbon atom;
and wherein X is H or an acylic group like R'CO-, wherein R' is a $C_1$-$C_{20}$ linear or branched alkyl radical, optionally containing one or more ethylenic unsaturations;
T is $-NH_2$ or $-NH_3^+$, M is an alkaline earth metal and W is an anion of a pharmaceutically acceptable inorganic acid selected from sulphate, chloride and bromide, or an anion of an organic acid, selected from acetate and tartrate;
m can be O, and in this case T is = $-NH_2$, or can be 1 or 2, depending on the valence of the selected anion W;
1 is zero or 1/2, provided that when 1 is equal to zero T is = $-NH_3^+$.

The applicant has in fact unexpectedly found that the derivatives having general formula (I) show a much higher antiamnesic activity than that of the abovementioned known compounds.

The present invention further relates to pharmaceutical compositions containing as the active principle the derivatives having general formula (I) according to the present invention, in combination with suitable excipients, diluents and/or vehicles.

The pharmaceutical compositions according to the present invention are particularly suitable for enhancing the learning and memory processes and may be administered either by oral or parenteral way.

A further object of the present invention resides in the process for the preparation of the derivatives having general formula (I), comprising the following steps:

a) the derivative having formula (III)

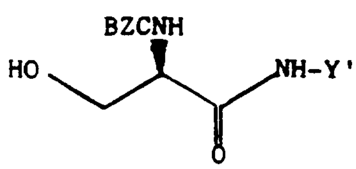

(III)

wherein CBZ indicates carbobenzyloxy and Y' has the same meanings as Y, with the following differences:

i) when the derivative of formula (I) is to be obtained,where Y =

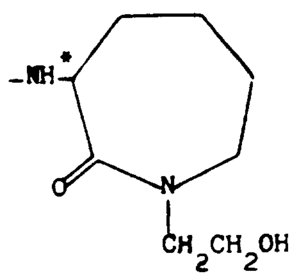

and X = H, Y' is =

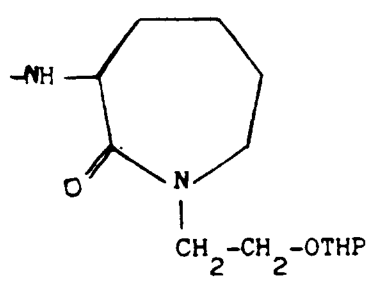

wherein THP represents tetrahydropyranyl; or:

(ii) when the derivative of formula (I) is to be obtained,
wherein Y =

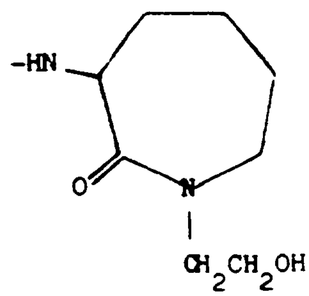

and X = R'CO-, then Y' shall be

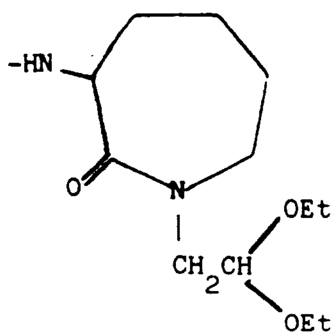

is reacted with $POCl_3$ and (S)-isopropylideneglycerol in 2,6-lutidine or mixtures of 2,6-lutidine and pyridine, in order to obtain the intermediate having formula (IV):

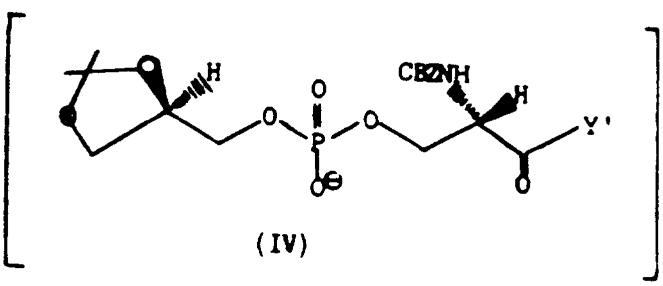

(IV)

which immediately is hydrolized in the acid medium, then passed through an ($M^{++}$) cation exchange resin, where $M^{++}$ is the cation of an alkaline earth metal, in order to obtain the intermediate (Va):

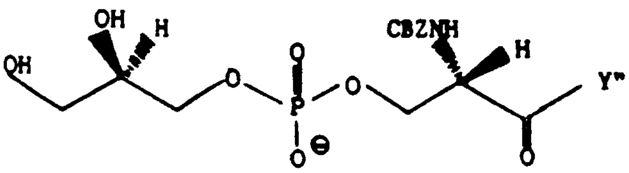

$.1/2\ M^{++}$ (Va)

wherein Y'' has the same meanings as Y', with the sole difference that (i) when Y', in the product of formula (III), is equal to

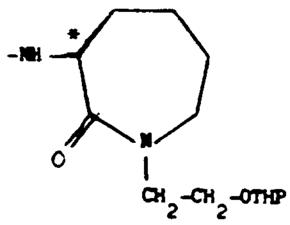

Y'' is =

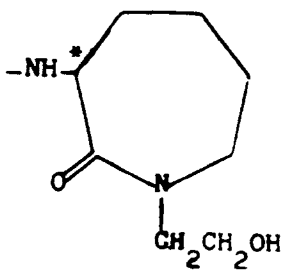

(ii) when Y' is =

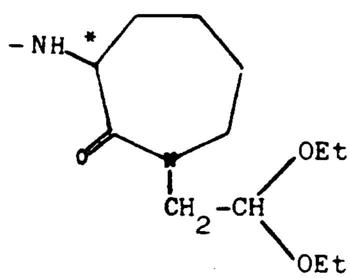

then Y'' is =

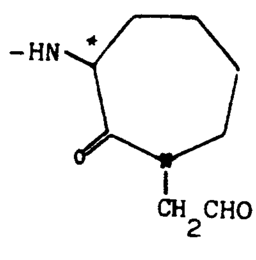

b') the derivative (Va) obtained according to (a) is treated with $H_2$ and Pd/C, in order to obtain the derivative having general formula (I), wherein X = H and l is equal to 1/2 and T = $-NH_2$; or, alternatively, b'') The derivative (Va) coming from step (a) is reacted with $R'(CO)_2O$, wherein R' has the above meanings, in the presence of dicyclohexylcarbodiimide and 4-dimethylamino-pyridine in chloroform and the thus obtained product is purified on an ($M^{++}$) cation exchange resin, thereby obtaining (Vb)

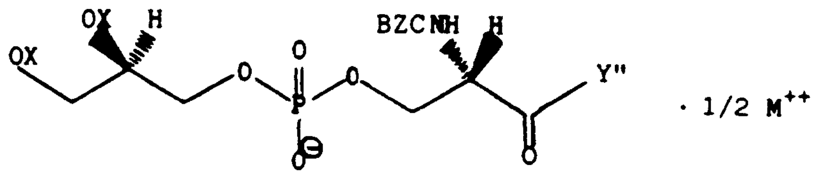

(Vb)

which is then treated with hydrogen and Pd/C, in order to obtain the derivative of formula (I), wherein X = R'CO, I is equal to 1/2 and T = $-NH_2$;

c') the derivative of formula (I) coming from step (b') or that coming from step (b") is crystallized by a further treatment with a cation exchange resin in which the $M^{++}$ cation is the cation of an alkaline earth metal, thus obtaining the derivative of formula (I) in which T = $-NH_2$, m = 0 and I is equal to 1/2; or

c") the derivative of formula (I) coming from step (b') or that coming from step (b") with a stoichiometric amount of the salt ($MW_m$), wherein M and W have above the meanings, in order to obtain the double salt having formula (I), wherein I is equal to 1/2, T = $-NH_2$ and m is 1 or 2, depending on the valence of the selected anion.

## DETAILED DESCRIPTION OF THE INVENTION

In the derivatives according to the present invention, when X is an acylic group it is preferably selected from acetyl, butirryl, hexanoyl, stearoyl, palmitoyl, oleoyl, linoleoyl, linolenoyl.

Because of the presence of 3 asymmetric carbon atoms, we will refer to, as to the carbon atom bearing the secondary hydroxylic group and to the carbon atom of serine, respectively to the R and S configurations, whereas, as to the asymmetric carbon present in the Y moiety, it is understood that :

i) when Y is equal to

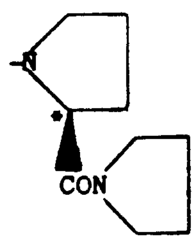

said carbon has only S configuration;

ii) when Y is equal to

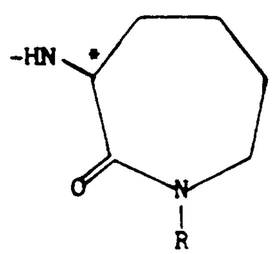

said carbon may show an R or an S configuration, although the derivative showing a higher activity is that having the configuration of the asymmetric carbon of the Y moiety is S.

The present invention further relates to the process for the preparation of the intermediate (III), which is utilized as a raw material for preparing the derivatives of formula (I).

It particularly resides in reacting serine, previously protected at the aminic function by the carbobenzyloxy group (CBZ), of formula (II):

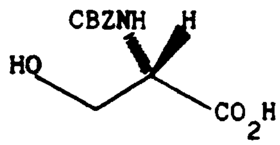

(II)

in the presence of dicyclohexylcarbodiimide (DCC), with the compound Y'H, wherein Y' is selected from:

A)

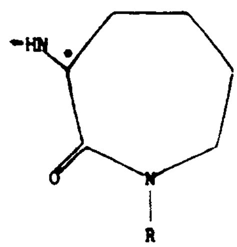

wherein the asterisk denotes the presence of an asymmetric carbon atom in which R = H, $CH_2CO_2Me$, $CH_2CONH_2$, $CH_2CH(OEt)_2$; and

B)

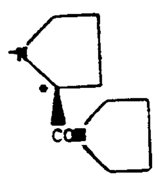

wherein the asterisk denotes the presence of an asymmetric carbon atom.

The intermediate of formula (III) in which Y' is =

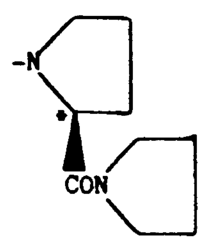

can also be prepared by the process comprising the following steps:

a) (S)-serine of formula II, having the aminic function previously protected by the carbobenzyloxy group, is reacted with (S)-proline-t-butylesterof formula (VI):

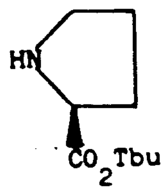

(VI)

thus obtaining the intermediate of formula (VII):

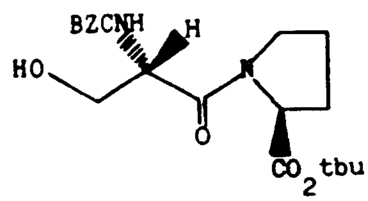

(VII)

b) the intermediate (VII) is successively hydrolized by $CF_3CO_2H$thereby obtaining the derivative (VIII):

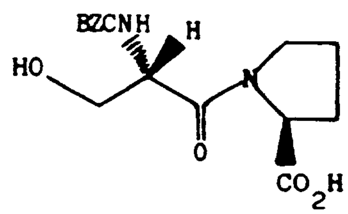

(VIII)

c) the intermediate (VIII) is then treated with dicyclohexylcarbodiimide and pyrrolidine, in order to obtain the desired intermediate (III).

The preparation of the intermediate (II), or the process for obtaining the protection of the aminic group of (S)-serine, involves the reaction of (S)-serine, in (2N) NaOH and at a temperature of from 0 to 5°C, with benzyl-chloroformate.

The Y'H product, which is utilized for the preparation of the intermediate (III), is prepared in the following way:

A) when Y' is:

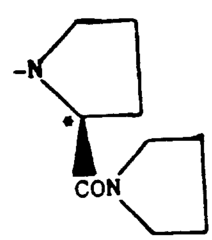

the synthesis of such intermediate requires the following steps:

a) (S)-proline is reacted with benzylchloroformate, in order to obtain the [N-CBZ-(S)-proline] of formula (IX):

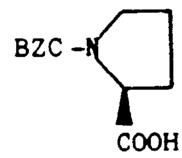

(IX)

b) the derivative (IX) is then condensed with pyrrolidine, in the presence of dicyclohexylcarbodiimide, in order to obtain the [N-CBZ-(S)-prolyl]-pyrrolidine (X):

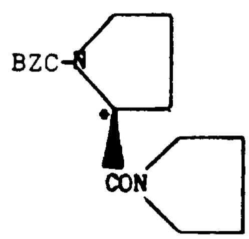

(X)

which in turn is treated with $H_2$ and Pd/C and converted into the Y'H derivative.

B) When Y', in the Y'H product, is =

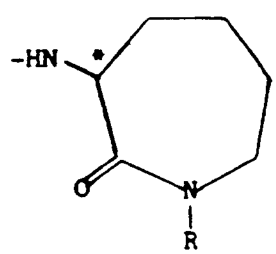

wherein R = $-CH_2CH_2O$-THP, THP denoting the protective tetrahydropyranyl group, said product is obtained according to the following process.

The product (XI):

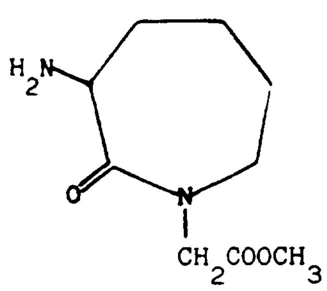

(XI)

is hydrolized to free acid, which, when cold-treated with ethylchloroformate in tetrahydrofurane and in the presence of an organic base, brings to the mixed anhydride (XII):

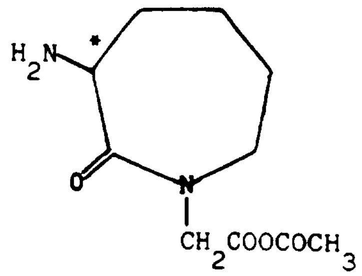

(XII)

This product, once treated with $NaBH_4$, brings to alcohol (XIII):

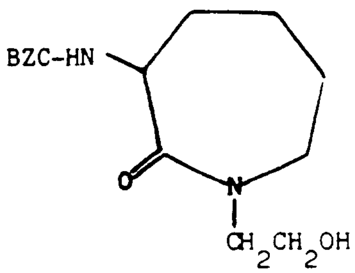

(XIII)

which can be treated with dihydropyrane, thus obtaining the product (XIV):

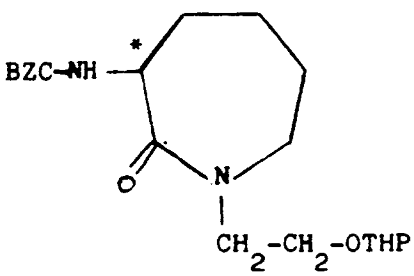

(XIV)

which is successively treated with hydrogen and Pd/C, in order to obtain the Y'H derivative in which Y' =

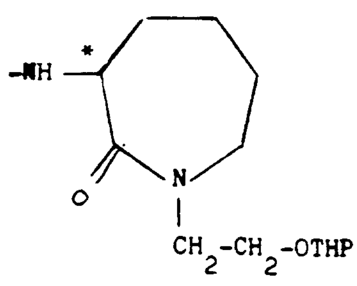

or the derivative (XIII) can be oxidized to aldehyde by an oxidizing agent like $CrO_3$ in stoichiometrical amounts, thus obtaining product (XV):

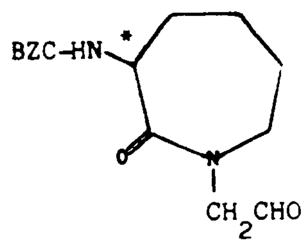

(XV)

which in its turn is treated with ethanol and successively with $H_2$ and Pd/C, in order to obtain the Y'H product in which Y' =

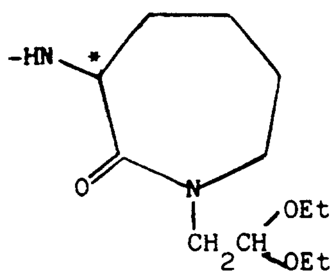

The product (XI) above indicated is obtained according to the following:
the (R) or (S)-amino-epsilon-caprolactam (XVI):

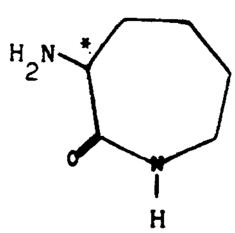

(XVI)

is reacted with benzylchloroformate and (1N) NaOH at a temperature from 0 to 5°C, in order to obtain the (R) or (S)-N-CBZ-epsilon-caprolactam (XVII):

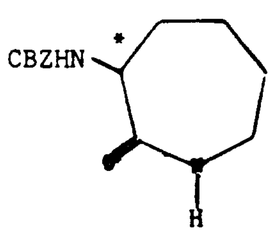

(XVII)

which is finally treated with methyl-bromoacetate at room temperature, in order to obtain derivative (XI), wherein $R = CH_2COOCH_3$:

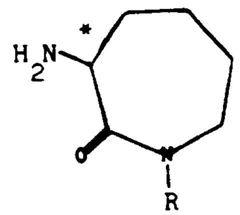

(XI)

The following examples are supplied for illustrative but not limitative purposes of the present invention.

**Part A**

Preparation of the compounds having formula (I), wherein Y =

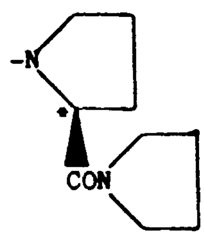

**Synthesis of (II)**

Benzylchloroformate (17 ml, 120 mmol) is added in 90' to a solution of (S)-serine (10.5 g, 100 mmol) in (2N) NaOH (50 ml) while at 0°C, maintaining the reaction temperature equal to or lower than 5°C and the pH at the 9-10 level by addition of (2N) NaOH.

The mixture is brought to room temperature and kept under stirring for 4 hours, always keeping the pH 9-10. An extraction with AcOEt is carried out (2x50 ml) and the aqueous phase, fixed at 5-10°C, is acidified to pH 2-3 with concentrated HCl (about 8 ml).

The mixture is kept at room temperature overnight, then is acidified to pH 1 with concentrated HCl (about 1 ml) and an extraction is carried out with AcOEt (4x50 ml).

The organic phase is washed with pickle, then dehydrated with $Na_2SO_4$, concentrated to small volume, diluted with $Et_2O$ (50 ml) and crystallized at +4°C. The solid is separated by filtration, washed with $Et_2O$ and dried at 40°C, thus obtaining 18 g of a white solid (II). Yield = 75%.

TLC: silica gel, eluent $CHCl_3$:MeOH:TEA = 7:3:0.1 Rf = 0.4; M.P. = 116-118°C

Title (NaOH): 97% s.s.

$[\alpha]_D$ = +3.2 (c = 5, EtOH)

$^1$H-NMR ($CD_3OD$): 7.3(s,2H); 5.12(s,2H); 4.30(t,1H); 3.85(d,2H).

| Elemental analysis | |
|---|---|
| calculated | found |
| C (55.23%)<br>H (5.44%)<br>N (5.86%) | 55.01%<br>(5.72%)<br>(5.78%) |

**Synthesis of N(CBZ-(S)-proline) (IX)**

Benzylchloroformate (6.8 ml; 48 mmol) was added drop by drop into a solution of (S)-proline (4.6 g; 40 mmol) in (1N) NaOH (80 ml) fixed at 0°C, while maintaining the reaction temperature equal to or lower than

5 °C. The mixture is kept at room temperature for 18 h, then is washed with AcOEt (2x30 ml) and the phases are separated. The aqueous phase is saturated with NaCl, acidified to pH 1.5 with concentrated HCl (about 10 ml) and extracted with AcOEt (4x30 ml). The organic phase is washed with pickle, then dehydrated with $Na_2SO_4$. After the solvent evaporation, under vacuum, 8.5 g of product (IX) are obtained.
TLC: silica gel, eluent $CHCl_3$:MeOH:TEA 92:7:1 Rf = 0.7
IR: 1740, 1700 $cm^{-1}$. Yield = 85%.

| Elemental analysis | |
|---|---|
| calculated | found |
| C (62.65%)<br>H (6.02%)<br>N (5.62%) | 62.77%<br>5.86%<br>5.49% |

**Synthesis of [N-CBz-(S)-prolyl]-pyrrolidine (X)**

Triethylamine (4.5 ml; 32 mmol) is added to a solution of (IX) (8 g; 32 mmol) in THF (100 ml), the mixture is cooled to -10 °C and then a solution of ethylchloroformate (3 ml; 32 mmol) in THF (15 ml) is added dropwise.

After 30' at -5 °C, a solution of pyrrolidine (3 ml; 32 mmol) in THF (15 ml) is slowly added dropwise, then the temperature is increased up to the room level. After 60' the solvent is removed under reduced pressure and the residue is treated with ice water (100 ml). One obtains a precipitate which is dissolved in AcOEt (150 ml).

The obtained solution is washed with a 5% $NaHCO_3$ solution (100 ml), then it is dried with $Na_2SO_4$ and the solvent is removed at a reduced pressure, thus obtaining 7.3 g of product (X). Yield = 75%.
TLC: silica gel; eluent AcOEt:MeOH:AcOH = 80:15:5 Rf = 0.75
M.P. = 133 °-135 °C
$^1$H-NMR(DMSO-d6):7.35-7.20 (m,5H); 5.05(d,1H syst. AB); 4.90 (d,1H syst. AB); 4.50-4.40 (m, 1H); 3.60-3.20 (m, 6H); 2.30-1.60 (m,8H).

**Synthesis of N(S-prolyl)-pyrrolidine (HY')**

10% Pd/C (0.3 g) is added to a solution of (X) (7.0 g, 23 mmol) in 95% EtOH (80 ml) and a hydrogenation reaction is carried out at room temperature and under atmospheric pressure. After 4 h the reaction mixture is filtered and the solvent is removed under reduced pressure, thus obtaining 3.5 g of product (HY'). Yield = 95%.

TLC: silica gel; eluent $CHCl_3$:MeOH:$H_2O$ = 60:34:6 Rf = 0.2 IR: 3310, 1685 $cm^{-1}$.

| Elemental analysis | |
|---|---|
| calculated | found |
| C (64.28%)<br>H (9.52%)<br>N (16.67%) | 64.41%<br>9.75%<br>16.71% |

**Synthesis of (III)**

N-CBz-(S)-serine (5 g; 25 mmol) is added to a solution of (HY') (4.2 g; 25 mmol) in $CH_2Cl_2$ (100 ml), the reaction nixture is left under stirring for 15', then DCC (5.2 g; 25mmol) is added and the mixture is again left under stirring for 8 h at room temperature. The formed dicyclohexylurea is filtered and the organic solution is first washed with (1N) HCl (20 ml), then with a 10% solution of $NaHCO_3$ (20ml), and finally dried on $Na_2SO_4$. The solvent is removed under reduced pressure, AcOEt (50 ml) is added to the residue and a filtration is carried out. 6.8 g of a white solid are thus obtained.
Yield = 70%.

TLC: silica gel; eluent AcOEt:MeOH:AcOH = 80:15:5 Rf = 0.6
M.P. = 142°-145°C.
IR (nujol): 3320, 3270, 1710, 1645, 1630 $cm^{-1}$.
$^{1}$H-NMR(DMSO-d6) 7.35-7.30 (m,6H); 5.02 (s,2H); 4.85-4.75 (m,1H); 4.60-4.50 (m,1H); 4.45-4.30 (m,1H); 3.70-3.15 (m,8H); 2.00-1.70 (m,8H).

| Elemental analysis | |
|---|---|
| calculated | found |
| C (61.70%) | 61.53% |
| H (6.94%) | 7.03% |
| N (10.80%) | 10.91% |

**Synthesis of (Va)**

$POCl_3$ (1.8 ml; 18 mmol) is added to 2,6-lutidine (30 ml) - 10°C, then the mixture is maintained under stirring for 5'. (S)-isopropylideneglycerol (2.3 ml; 18 mmol) dissolved in pyridine (20 ml) is added dropwise, always maintaining the same temperature.

The mixture is left under stirring for further 60', then (III) (7 g; 18 mmol) dissolved in pyridine (60 ml) is added dropwise while maintaining the temperature ≦ -5°C.

After 3 h 8% $NaHCO_3$ solution (40 ml) is added and the solvent is removed under reduced pressure at T ≦ 45°C. $H_2O$ (40 ml) is added to the residue and (IV) is extracted with AcOEt (2x20 ml). The aqueous phase is passed through AMBERLITE resin IR-120 ($H^+$), by elution with $H_2O$:MeOH = 1:1. The acid eluate is brought to pH 4-4.5 with solid $CaCO_3$; filtered and the filtered portion is concentrated under reduced pressure at T ≦ 50°C (final volume = 50 ml);then it is percolated through AMBERLITE resin IR-120 ($Ca^{++}$), by eluating with $H_2O$. After removing the solvent under reduced pressure, the product is purified by chromatography on silica gel, by elution with $CHCl_3$:MeOH:$H_2O$ = 60:35:5, thus obtaining 5 g of product (V).
TLC: eluting agent $CHCl_3$:MeOH:$H_2O$ = 60:35:5 Rf = 0.5
$^{1}$H-NMR(DMSO-d6): 7.35-7.25 (m,5H); 5.00 (s,2H); 4.78 (t,1H); 4.55-4.45 (m,2H); 3.75-3.20 (m,8H).
M.P. 129°-132°C

| Elemental analysis | |
|---|---|
| calculated | found |
| C (48.00%) | 48.26% |
| H (6.00%) | 5.87% |
| N (7.64%) | 7.53% |

**Synthesis of (I) where I=1/2; T=$NH_2$; m=0; N=Ca++**

10% Pd/C (0.5 g) is added to a solution of (V) (4.0 g; 7.1 mmol) in MeOH (150 ml) and a hydrogenation is carried out at room temperature and under atmospheric pressure. The mixture is filtered and the solvent is evaporated under reduced pressure at T ≦ 40°C. Thus 3.0 g of product (I) are obtained.
TLC: silica gel; eluent $CHCl_3$:MeOH:TEA = 70:30:0.1 Rf = 0.3

| Elemental analysis | |
|---|---|
| calculated | found |
| C (40.38%) | 40.51% |
| H (6.49%) | 6.72% |
| N (10.10%) | 9.88% |

**Synthesis of the diacetyl derivative of (Vb)**

Pyridine (1.2 ml; 16.42 mmol), acetic anhydride (1.65 ml; 16.42 mmol) and 4-DMAP (4-dimethylaminopyridine) (45 mg, 0.38 mmol) are added to a suspension of (Va) (2.0 g; 3.6 mmol) in $CHCl_3$ - (40 ml) and the reaction is left for 24 h at room temperature.

The reaction mixture is diluted with cold water and the solvent is removed under reduced pressure at T ≦ 50 °C.

The residue is percolated through 40 ml of Amberlist resin, by eluting with $MeOH:H_2O = 1:1$, then it is concentrated to small volume (10 ml) under vacuum and percolated through 30 ml of AMBERLITE IR-120 ($Ca^{++}$), eluting with $MeOH:H_2O = 1:1$. 2.1 g of (Vb) are thus obtained.

TLC: silica gel; eluent $CHCl_3:MeOH = 60:40$ Rf = 0.55

| Elemental analysis | |
|---|---|
| calculated | found |
| C (50.15%) | 50.32% |
| H (5.73%) | 5.88% |
| N (6.50%) | 6.31% |

By using the same method also the dibutirryl, dipalmitoyl and dioleoyl derivatives having general formula (Vb) are obtained. The structure is confirmed by the relative spectral and elemental analysis. By a simple reduction at room temperature and atmospheric pressure, by following the method hereinabove, the corresponding derivatives of general formula (I) where m = 0; l = 1/2 and $M = Ca^{++}$ are obtained.

**Synthesis of (I) where X=diacetyl**

The product (Vb) (2.1 g; 3.25 mmol) is dissolved in $MeOH:H_2O = 2:1$ (150 ml), 10% Pd/C (0.3 g) is added and a hydrogenation reaction is carried out at room temperature and under atmospheric pressure. After 5 h the mixture is filtered and the solvent is brought to dryness under reduced pressure.

TLC: silica gel; eluent $CHCl_3:MeOH:H_2O = 50:45:5$ Rf = 0.25

| Elemental analysis | |
|---|---|
| calculated | found |
| C (44.53%) | 44.29% |
| H (6.05%) | 6.31% |
| N (8.20%) | 7.97% |

**Part B**

Preparation of the compounds of formula (I) where Y =

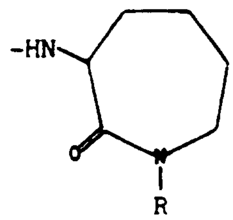

**Synthesis of (III) R of the moiety Y = H**

TEA (48 ml; 345 mmol) is added to a solution of N-CBz-(S)-serine (55 g; 230 mmol) in THF (800 ml)-,previously cooled down to -7 ° C, and after 5', a solution of ethylchloroformate (22 ml; 230 mmol) in THF (50 ml) is slowly added drop by drop, thus forming a white precipitate; after 5', S(-)-α-amino-epsilon-caprolactam (29.5 g; 230 mmol) is added and after 60' the reaction mixture is decomposed with $H_2O$ (1 litre), the temperature is brought to room level and the reaction is left under vigorous stirring for 30'. The mixture is filtered and the precipitate is washed with $H_2O$ and dried at 50 ° C under reduced pressure, thus obtaining 34 g of product (III).
Yield = 45%.
TLC: silica gel; eluent $CHCl_3$:MeOH = 9:1 Rf = 0.4
M.P. = 205-207 ° C
IR (KBr): 3280, 2920, 1680, 1620, 1300 $cm^{-1}$.
$^1$H-NMR(DMSO-d6) 8.00-7.20 (m,8H); 5.15(s,2H); 4.90(t,1H); 4.45-4.30(m,1H); 4.10-4.00(m,1H); 3.70-3.50-(m,2H); 3.30-3.00(m,2H).

| Elemental analysis | |
|---|---|
| calculated | found |
| C (58.45%) | 58.66% |
| H (6.59%) | 6.77% |
| N (12.03%) | 11.85% |

**Synthesis of (Va) (R of the moiety Y=H)**

$POCl_3$ (4.3 ml 46.4 mmol) is added to the 2,6-lutidine (40 ml), cooled to -7 ° C.

After 5', a solution of (S)-isopropylideneglycerol (4.8 ml; 38.7 mmol) in 2,6-lutidine (40 ml) is added, then, after further 15', within 60', a solution of (III) (13.5 g; 38.7 mmol) in pyridine (160 ml) is added drop by drop. After 4 h, the reaction is extinguished with 10% $NaHCO_3$ (50 ml) and the temperature is raised to the room level. The solvent is removed under reduced pressure, $H_2O$ is added (100 ml) and (IVa) is extracted with AcOEt (3x50 ml).

The aqueous phase is concentrated under reduced pressure to 50 ml at T ≦ 45 ° C and percolated through 200 ml of AMBERLIST 15 resin, by elution with MeOH:$H_2O$ = 1:1. The eluate is immediately brought to pH 4.5 by means of solid $CaCO_3$. The mixture is filtered and the solvent is removed under reduced pressure and at a T ≦ 50 ° C. Subsequently, the obtained residue is purified by flash chromatography (eluent THF:$H_2O$ = 9:1). The solvent is removed under reduced pressure and the residue is percolated through 150 ml of AMBERLITE resin IR-120 ($Ca^{++}$), eluting with $H_2O$. After $H_2O$ evaporation under reduced pressure and at T ≦ 50 ° C, 19 g of product (Va) are obtained.
TLC: silica gel; eluent THF:MeOH:$H_2O$ = 80:15:5 Rf = 0.85
M.P. = 165 ° -167 ° C
$^1$H-NMR(DMSO-d6-$D_2O$): 4.95 (s,2H); 4.20 (t,1H); 3.95-3.80 (m,2H); 3.70-3.30 (m,5H); 3.15-3.00 (m,2H); 1.90-1.10 (m,6H).

$^{13}C$-NMR (DMSO-d6; 50.3 MHz) = 174; 168.5; 155.9; 137.2; 128.6; 127.5; 127.3; 71.1; 66.2; 65.8; 64.2; 62.7; 51.7; 31.0; 28.6; 27.7.

| Elemental analysis | |
|---|---|
| calculated | found |
| C (45.98%)<br>H (5.55%)<br>N (8.04%) | 46.13%<br>5.78%<br>7.91% |

**Synthesis of (I) (R of the moiety Y=H and in which X=H; T = $NH_2$; 1 = 1/2; M= $Ca^{++}$; m = 0)(MGS4)**

10% Pd/C (0.1 g) is added to a solution of (Va) (1.0 g; 1.92 mmol) in MeOH:$H_2O$ = 1:1 (40 ml)and a hydrogenation reaction is carried out at room temperature and under atmospheric pressure. After 4 h, the mixture is filtered and the solvent is evaporated under reduced pressure and at T ≦ 50 °C, thus obtaining 0.7 g of product (Ia).

TLC: silica gel; eluent $CHCl_3$:MeOH:$H_2O$ = 50:49:1 Rf = 0.7.

M.P. = 212°-214°C

$^1H$-NMR (DMSO-d6-$D_2O$): 4.40 (brd; 1H); 4.10-3.30 (m, 7H); 3.20-2.05 (m,2H); 2.00-1.00 (m,6H).

| Elemental analysis | |
|---|---|
| calculated | found |
| C (37.11%)<br>H (5.93%)<br>N (10.82%) | 37.40%<br>6.14%<br>10.61% |

**Synthesis of (Vb) (R of the moiety Y = H, X= $COCH_3$)**

Pyridine (0.56 ml; 7.664 mmol), acetic anhydride (0.77 ml; 7.664 mmol) and 4-DMAP (23 mg; 0.192 mmol) are added to a suspension of (Va) (1.00 g; 1.916 mmol) in $CHCl_3$ (15 ml) and the mixture is left to react for 24 h at room temperature. The mixture is then diluted with $H_2O$ and the solvent is removed under reduced pressure and at temperature ≦ 50 °C. The residue is percolated through 20 ml of AMBERLIST 15, eluting with MeOH:$H_2O$ = 1:1.

The mixture is concentrated under reduced pressure to a volume of 5 ml and percolated through 15 ml of AMBERLITE IR-120 ($Ca^{++}$) eluting with MeOH:$H_2O$ = 1:1. 1.01 g of (Vb) are thus obtained.

TLC: silica gel; eluent $CHCl_3$:MeOH = 60:40 Rf = 0.7

| Elemental analysis | |
|---|---|
| calculated | found |
| C (47.37%)<br>H (5.76%)<br>N (6.91%) | 47.53%<br>5.89%<br>6.84% |

By using the same method also the dibutirryl, dihexanoyl and dioleoyl derivatives of general formula V are synthetized. The structures are confirmed by the relative elemental and spectral analysis.

By a simple reduction carried out at room temperature and under atmospheric pressure, following the method hereinabove described, the corresponding derivatives of general formula (I), where 1 = 1/2; M = $Ca^{++}$; m = 0; T = $NH_2$ are obtained.

**Synthesis of (I), where R of the moiety Y=H, X=$COCH_3$; I=1/2; M=$Ca^{++}$**

10% Pd/C (0.1 g) is added to the product (Vb) (1.0 g; 1.65 mmol), dissolved in MeOH:$H_2O$ = 1:1 (100 ml) and a hydrogenation reaction is carried out at room temperature and under reduced pressure. After 5 h, the mixture is filtered and the solvent is removed under reduced pressure. Thus 0.75 g of product (I) are obtained.
TLC: silica gel; eluent $CHCl_3$:MeOH:$H_2O$ = 50:45:5 Rf = 0.65

| Elemental analysis | |
|---|---|
| calculated | found |
| C (40.51%)<br>H (6.12%)<br>N (8.86%) | 40.70%<br>5.99%<br>8.61% |

**Synthesis of N-CBz-(S)-amino-epsilon-caprolactam (XVII)**

The benzylchloroformate (27 ml; 187 mmol) and 1N NaOH (187 ml) are added within 90' to a solution of S(-)-$\alpha$-amino-epsilon-caprolactam (20 g; 157 mmol) in $H_2O$, cooled to 0°C under satisfactory stirring, while maintaining the pH between 9 and 10.

The mixture is left to react for 6 h at room temperature, then the formed precipitate is filtered and dried at 50°C under vacuum, thus obtaining 40 g of (VI). M.P. = 110°-113°C.
TLC: silica gel; eluent $CHCl_3$:MeOH = 98:2 Rf = 0.30
$^1$H-NMR(DMSO-d6): 7.75-7.65 (m,1H); 7.35-7.28 (m,5H); 7.00 (s,1H); 5.05 (s,2H); 4.22-4.10 (m,1H); 3.25-3.00 (m,2H); 1.95-1.10 (m,6H).

**Synthesis of (XII)**

A solution of (VI) (20 g; 74.3 mmol) dissolved in THF (400 ml) is added in 30' to a suspension of NaH (3.7 g at 60% concentration in mineral oil; 91.6 mmol) in THF (500 ml), cooled to 0°C,. The mixture is brought to room temperature and stirred until a complete release of $H_2$; thereafter in 20', the methyl-bromoacetate (8.7 ml; 91.6 mmol) and the mixture is left for 5 h at room temperature. The reaction is extinguished by means of 5% $NaH_2PO_4$ (300 ml), the phases are separated, an extraction is carried out with AcOEt (4x100 ml) and dried on $Na_2SO_4$, thus obtaining a raw product which is purified by means of flash chromatography (eluent = hexane:AcOEt 75:25). 16.5 g of (XII) are thus obtained. Yield = 65%.
TLC: silica gel; eluent hexane: AcOEt = 75:25 Rf = 0.35

**Synthesis of HY' where R of the moiety Y'=$CH_2COOCH_3$**

10% Pd/C (1 g) is added to a solution of (XII) (28 g; 83.7 mmol) in EtOH (200 ml) and a hydrogenation reaction is carried out at room temperature and under atmospheric pressure. After 4 h the mixture is filtered and the solvent is removed under reduced pressure. 16 g of product (HY') are thus obtained. Yield = 95%.
TLC: silica gel; eluent $CHCl_3$:MeOH = 1:1 Rf = 0.2

**Synthesis of (III) (where R of the moiety Y'=$CH_2COOCH_3$)**

(II) (1.2 g; 5 mmol) is added to a solution of (HY') (1 g; 5 mmol) in THF (50 ml), then the mixture is cooled down to 0°C and there are added, in the order, N-hydroxysuccinimide (0.69 g; 6 mmol) and DCC (1 g; 5 mmol) are added. After 5 h at 0°C the formed dicyclohexylurea is filtered and the solvent is removed under reduced pressure. The product is purified by means of flash chromatography (eluent $CHCl_3$:MeOH = 98:2) and 1.7 g of a white solid are thus recovered. Yield = 80%.
TLC: silica gel; eluent $CHCl_3$:MeOH-98:2 Rf = 0.35
M.P. = 38°-41°C
$^1$H-NMR(DMSO-d6): 7.92 (d.1H); 7.45-7.25 (m,6H); 5.05 (s,2H); 4.88(t,1H); 4.65-4.55 (m,1H); 4.15 (d,2H); 4.10-4.05 (m,1H); 3.75-3.25 (m,4H); 3.65 (s,3H); 2.00-1.40 (m,6H).

| Elemental analysis | |
|---|---|
| calculated | found |
| C (56.87%)<br>H (6.63%)<br>N (9.95%) | 56.63%<br>6.79%<br>9.83% |

**Synthesis of (Va) where R of the moiety Y'=$CH_2COOCH_3$; T=$NH_2$; l=1/2; M=$Ca^{++}$; m=0**

$POCl_3$ (0.6 ml; 6.6 mmol) is added to the 2,6-lutidine, cooled to -7 °C, and stirred for 5'. A solution of (S)-isopropylideneglycerol (0.7 ml; 5.5 mmol) in 2,6-lutidine (10 ml) is added dropwise and stirred for 30', while keeping the T ≦ -7 °C.

A solution of compound (III) (2.3 g; 5.5 mmol) in 2,6-lutidine (20 ml) is finally added and the mixture is reacted at -7 °C for 4 h. At the end, the reaction mixture is treated with 10% $NaHCO_3$ (20 ml), diluted with $H_2O$ (30 ml) and the solvent is removed under reduced pressure. $H_2O$ (40 ml) is then added, the unreacted portion is extracted with AcOEt (2x15 ml) and the aqueous phase is percolated through 50 ml of AMBERLIST-15 resin, eluting with MeOH; the eluate is immediately brought to pH 4-4.5 by means of solid $CaCO_3$. The mixture is filtered and part of the MeOH is removed under reduced pressure (up to a final volume of 15 ml), then a percolation is carried out through 50 ml of AMBERLITE IR-120 ($Ca^{++}$), eluting with MeOH. The solid obtained by evaporation of the solvent is purified by means of flash chromatography (eluent $CHCl_3$:MeOH:$H_2O$ = 65:30:5) thus recovering (Va).
M.P. = 98 °-104 °C.
TLC: silica gel; eluent $CHCl_3$:MeOH,$H_2O$ = 65:30:5 Rf = 0.5
$^1$H-NMR(DMSO-d6) 8.10-8.00 (m,1H); 7.90 (d,1H); 7.35-7.25 (m,5H); 5.15-5.05 (m,1H); 5.00 (s,2H); 4.75-4.65 (m,1H); 4.60-4.50 (m,1H); 4.20 (s,2H); 4.05-3.50 (m,5H); 3.65 (s,3H); 3.40-3.20(m,4H); 1.90-1.35 (m,6H).
$^{13}$C-NMR(DMSO-d6 50.3 MHZ) selected data: 173.0; 170;168.5; 156.2; 137.0; 128.3; 128.0; 127.5; 71.0; 66.5; 65.5; 64.3; 62.7; 51.0; 31.2; 27.5; 26.5.

| Elemental analysis | |
|---|---|
| calculated | found |
| C (46.46%)<br>H (5.55%9)<br>N (7.07%) | 46.19%<br>5.68%<br>6.89% |

**Synthesis of (I) where X=H, R of the moiety Y=$CH_2COOCH_3$; l=1/2; M=$Ca^{++}$(MGS2)**

10% Pd/C (0.1 g) is added to a solution of (Va) (1 g; 1.7 mmol) in the mixture MeOH:$H_2O$ = 1:1 (20 ml) and hydrogenation is carried out at 35 °C and under atmospheric pressure. The hydrogenation mixture is filtered and the solvent is evaporated at reduced pressure and at a T lower or equal to 50 °C. 0.8 g of product (I) are thus obtained.
TLC: silica gel; eluent $CHCl_3$:MeOH:$H_2O$ = 50:49:1 Rf = 0.5

| Elemental analysis | |
|---|---|
| calculated | found |
| C (39.13%)<br>H (5.87%) | 38.94%<br>5.99% |

**Synthesis of (I) wherein X = $COCH_3$ and R of the moiety Y = $CH_2COOCH_3$ 1=1/2 M=$Ca^{++}$; m=0 (MGS1)**

2.5 g (4 mmol) of the product (Va) obtained as decribed at pages 27-28 of the present description is suspended in 40 ml $CHCl_3$; 1.4 ml (18.7 mmol) anhydrous pyridine, 1.88 ml (18.7 mmol) acetic anhydride and 45 mg (0.38 mol) DMAP are then added, and the mixture is left under stirring at room temperature for 36 hours.

The mixture is then slowly diluted with icy water and evaporated to dryness under reduced pressure at T lower or equal to 50 °C.

The residue is then percolated on 40 ml Amberlist 15 and eluted with methanol water = 1:1.

The eluate is then concentrated to small volume under reduced pressure, and percolated on Amberlite resin IR 120 ($Ca^{++}$) and eluted with water.

After evaporating the eluent to dryness under reduced pressure the obtained solid id purified by flash chromatography, by eluting with $CHCl_3$: $CH_3OH$: water = 65:30:5.

After solvent evaporation 1.7 g are obtained of the product (Vb) consisting of white solid, having the following characteristics:
m.p. 72-75 °C
TLC $R_f$ = 0.7 eluent $CHCl_3$:$CH_3OH$:$H_2O$ = 65:30:5
This product (1.7 g; 2.4 mmol) is then dissolved in a mixture ethanol: water = 2:1 (30 ml).

Then 0.2 g 10% Pd/C are then added and a hydrogenation reaction is carried out at 30 °C under atmospheric pressure.

The reaction mixture is then filtered and evaporated under reduced pressure at T lower or equal to 45 °C. 1.2 g of (I), consisting of a white solid product having the following features:
TLC $R_f$ = 0.5 eluent $CHCl_3$:$CH_3OH$ = 56: 43:1

| Elemental Analysis M.W. 544 | |
|---|---|
| calculated | found |
| C (41.91%)<br>H (5.70%)<br>N (7.72%) | 42.13%<br>5.84%<br>7.58% |

## 1. Evaluation of the antiamnesic activity

The antiamnesic activity was tested by means of the classical passive avoidance test, with respect to the amnesy induced in the rat, by administration of scopolamine, or by means of electroconvulsive shock (ECS).For both the tests a shuttle-box was used of the Ugo Basile Company (Comerio, Varese), consisting of two compartments, one of which compartments was clear and the other one dark and fitted with an electrifiable floor.

In order to induce a passive avoidance response, the animal was placed onto a runner of the clear compartment, enlightened by a 60 watt lamp, for a 1 minute acclimatisation, whereafter a bulkhead was opened putting the runner in communication with the dark compartment, which the animal istinctively entered after a latency of a few seconds. The bulkhead was immediately shut and the animal got a 0.21 mA current for 2 second through the electrifiable floor. The animal was then removed and newly subjected to the test 24 h later, in order to verify the retention level of the acquired response of passive avoidance, measuring the latency required by the entry into the electrifiable compartment, with an end-point of 300 second.

All the tests were carried out under conditions of stratified randomization, using in each test session the same number of animals for the different experimental groups tested in parallel, and comprising, besides the groups treated with the product under test (test substances and reference substances having known activity), two separate groups of controls and precisely: blank controls (animals treated with placebo) and deconditioned controls (animals treated with placebo and subjected to amnesic treatment by means of scopolamine or of ECS).

The results obtained with the different dosages of the products subjected to screening and with the corresponding reference standards having a known activity, namely N(S)-3-(formyl-amino)-epsilon-caprolactam, N(4-phenylbutanoyl-hydroxy)prolyl-pyrrolidine and glycerophosphoryl-serine, were expressed as a

percentage of antagonism of the amnesy (AA), defined according to the following formula:

$$AA = \frac{ICt}{ICb} \cdot 100$$

wherein the index of comparison IC, concerning treated animals (t) and blank controls (b), is defined by the formula:

$$IC = \frac{\Sigma\ Amn}{Nm\ .\ Nn} \cdot 100$$

wherein:

Nm = number of animals belonging to group m (blanks or treated animals);

Nn = number of animals belonging to group n (deconditioned animals);

Amn = binary function which can assume only the values +1, zero or - 1, depending on the fact that the latency time (seconds) of an animal of the m group (xm) be respectively higher than, equal to or lower than the latency time (seconds) of an animal of the n group (xn).

The summation Σ Amn i extended to all the pairs obtained combining each xm term with each xn term.

Normally the comparison index (IC) between blank controls and deconditioned controls is between 60% and 80% and the test was discarded when such index resulted to be lower than 40%.

**1.1 Impact on the scopolamine induced amnesy**

The utilized rats were male C.r.l.: CD (50) BR (Charles River Italia), showing a weight of 150-170 g, after an acclimatisation time of a week, under standard conditions.

The animals got the products to be tested by intraperitoneal way and scopolamine bromhydrate (1 mg/kg) by subcutaneous way, respectively 45 and 30 minutes before being subjected to the previously described avoidance test.

As to the standard substances [GFS, N(S)-3-(formylamino)-epsilon-caprolactam and N(4-phenylbutanoylhydroxy)prolyl-pyrrolidine], the used dosage was $4x10^{-2}$ mmol/kg, whereas for the products to be tested the used dosage was between $1x10^{-2}$ and $12x10^{-2}$ mmol/kg, with an intermediate dosage equimolar with respect to the one of the standards.

The results obtained according to the re-test, performed 24 h later and elaborated as previously explained, pointed out an antiamnesic effect (A.A.), depending on the dosage, for all the tested substances.

The entity of such effect, in the compounds of formula (I), gives considerably superior results than the one of the reference standards [glycerolphosphoryl-serine, N(S)-3-formylamino-epsilon-caprolactam, N(4-phenylbutanoylhydroxy)prolyl-pyrrolidine] as it clearly results from the following table.

**AMNESIA TEST WITH RATS (INTRAPERITONEAL ADMINISTRATION)**

| Compound (dose) | Drug administration after learning | No. of rats tested | LEARNING: Initial avoid. time (sec.) | LEARNING: Learning time (sec.) | Avoid. time (sec.) After 24 h | Pharmacological effects: No. of amnesic rats/No. of rats tested | Pharmacological effects: Percent amnesia |
|---|---|---|---|---|---|---|---|
| Physiological saline | Physiological saline | 10 | 3,5 | 110 | 92,5 | 6/10 | 60 |
| Physiological saline | Scopolamine HBr (1 mg/kg i.p.) | 10 | 1,8 | 110 | 28,6 | 10/10 | 100 |
| GFS ($4.10^{-2}$ mmoli/kg) | Scopolamine HBr (1 mg/kg i.p.) | 10 | 2,2 | 110 | 126,5 | 4/10 | 40 |
| N-Formylamino ε - caprolactame ($4.10^{-2}$ mmoli/kg) | Scopolamine (1 mg/kg i.p.) | 10 | 2,1 | 110 | 72,5 | 4/10 | 40 |
| Phenyl-butirryl prolyl-pirrolidine | Scopolamine (1 mg/kg i.p.) | 10 | 2,3 | 110 | 101,7 | 4/10 | 40 |
| MGS 1 ($4.10^{-2}$ mmoli/kg) | Scopolamine (1 mg/kg i.p.) | 10 | 2,3 | 110 | 243,5 | 2/10 | 20 |
| MGS 1 ($8.10^{-2}$ mmoli/kg) | Scopolamine (1 mg/kg i.p.) | 10 | 2,5 | 110 | 266,6 | 1/10 | 10 |
| MGS 1 ($12.10^{-2}$ mmoli/kg) | Scopolamine (1 mg/kg i.p.) | 10 | 1,6 | 110 | 300 | 0/10 | 0 |

**AMNESIA TEST WITH RATS (INTRAPERITONEAL ADMINISTRATION)**

| | | | | | | | |
|---|---|---|---|---|---|---|---|
| MGS 2 ($4.10^{-2}$ mmoli/kg) | Scopolamine (1 mg/kg i.p.) | 10 | 1,9 | 110 | 270 | 2/10 | 20 |
| MGS 2 ($8.10^{-2}$ mmoli/kg) | Scopolamine (1 mg/kg i.p.) | 10 | 2,3 | 110 | 300 | 0/10 | 0 |
| MGS 2 ($12.10^{-2}$ mmoli/kg) | Scopolamine (1 mg/kg i.p.) | 10 | 2,1 | 110 | 300 | 0/10 | 0 |
| MGS 3 ($4.10^{-2}$ mmoli/kg) | Scopolamine (1 mg/kg i.p.) | 10 | 2,2 | 110 | 234 | 3/10 | 30 |
| MGS 3 ($8.10^{-2}$ mmoli/kg) | Scopolamine (1 mg/kg i.p.) | 10 | 1,8 | 110 | 249 | 2/10 | 20 |
| MGS 3 ($12.10^{-2}$ mmoli/kg) | Scopolamine (1 mg/kg i.p.) | 10 | 1,9 | 110 | 288 | 1/10 | 10 |

**1.2 Impact on the ECS engendered amnesy**

The used rats were from the same stock and showed the same features pointed out for the preceding test.

The animals got the products to be tested 30 minute before undergoing the previously described avoidance test.

In this series of experimental works the deconditioning treatment consists of an electroshock (square wave of 45 m, amplitude 0.6 ms, time 2 s and frequency 40 Hz), delivered by means of auricular electrodes, connected to an electrostimulator ECT/UNIT of the Ugo Basile Company (Comerio, Varese).

The used dosages were $8x10^{-2}$ mmol/kg for the standard substances, therefore higher than the ones used in the preceeding test and this depends on a lower activity of the standard substances, previously ascertained in this test, in our experimental conditions.

The dosages of the products to be tested were correlatively comprised between $2x10^{-2}$ and $24x10^{-2}$ mmol/kg, with an intermediate dosage equimolar ($8x10^{-2}$ mmol/kg) with respect to the ones of the standard substances.

The results obtained in the re-test, performed 24 h later and elaborated as previously indicated, confirmed the good antiamnesic activity (A.A.) of the tested products, although it is not possible to trace a tight effectiveness correlation with respect to the preceding test.

For all the tested compounds of formula (I), the activity, in any case, gave appreciably superior results than those of the reference standard substances [glycerolphosphoryl-serine, N(S)-3-formylamino-epsilon-caprolactam, N(4-phenylbutanoylhydroxy)prolyl-pyrrolidine].

**ECS TEST**

Electroconvulsive shock was used as the amnesic treatment and the test compounds were administered i.p. to groups of 10 mice 30' before the acquisition trial.

The results obtained are summarised in the table below.

| Treatment | Time taken to enter chamber (min) at dose ($10^{-2}$ mmoli/kg) | | | | | |
|---|---|---|---|---|---|---|
| | 0 | 4 | 8 | 12 | 16 | 24 |
| Amnesic control | 0,103 | --- | --- | --- | --- | --- |
| GFS | --- | --- | 0,236 | --- | --- | --- |
| Formyl-caprolactame | --- | --- | 0,131 | --- | --- | --- |
| Phenyl-butirryl prolyl-pyrrolidine | --- | --- | 0,213 | --- | --- | --- |
| MGS 1 | --- | 0,664 | 1,378 | 1,916 | 1,615 | --- |
| MGS 2 | --- | 0,557 | 1,418 | 2,072 | 1,777 | --- |
| MGS 3 | --- | --- | 0,572 | --- | 1,110 | 1,695 |
| MGS 4 | --- | --- | 0,466 | 1,316 | --- | 1,883 |

## Claims

1. Amidic derivatives of (R)-glycerylphosphoryl-(S)-serine and of its diacyl derivative of general formula (I):

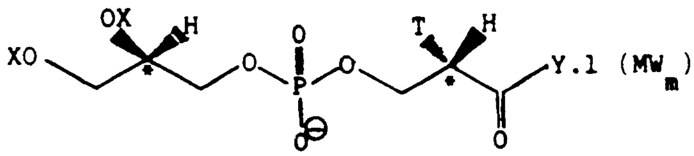

(I)

wherein the asterisk denotes the presence of an asymmetric carbon atom and Y is selected from:

A)

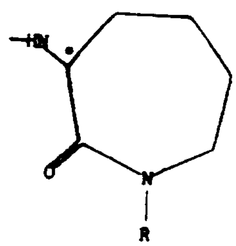

wherein the asterisk denotes the presence of an asymmetric carbon atom and R = H, $CH_2CO_2Me$, $CH_2CONH_2$, $CH_2CH_2OH$, $CH_2CHO$;

B)

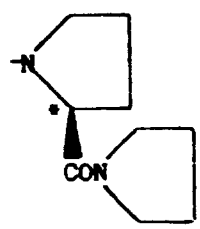

wherein the asterisk denotes the presence of an asymmetric carbon atom;

and wherein X is H or an acylic group like R'CO-, wherein R' is a $C_1$-$C_{20}$ linear or branched alkyl radical, optionally containing one or more ethylenic unsaturations;

and wherein T is $-NH_2$ or $-NH_3^+$, M is an alkaline earth metal and W is a pharmaceutically acceptable anion of an inorganic acid, selected from sulphate, chloride and bromide anions, or an anion of an organic acid, selected from acetate and tartrate anions;

and wherein m can be 0, and in this case T is = $-NH_2$, or can be = 1 or 2, depending on the valence of the selected W anion, l is equal to zero or to 1/2, provided that when l is equal to zero T is = $-NH_3^+$.

**2.** The amidic derivatives of the (R)-glycerylphosphoryl-(S)-serine or of its diacyl derivative according to claim 1, characterized in that when X is an acyl group it is selected from acetyl, butirryl, hexanoyl, stearoyl, palmitoyl, oleoyl, linoleoyl or linolenoyl.

**3.** The amidic derivatives of (R)-glycerylphosphoryl-(S)-serine or of its diacyl derivative according to claim 1, characterized in that:

i) when Y =

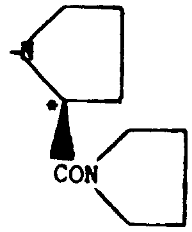

the asymmetric carbon of the moiety Y has only an S configuration;
ii) when Y =

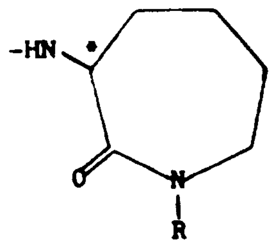

the asymmetric carbon on the moiety Y may have configuration R or S.

**4.** The amidic derivatives of (R)-glycerylphosphoryl-(S)-serine or of its diacyl derivative according to claim 3, characterized in that, when Y =

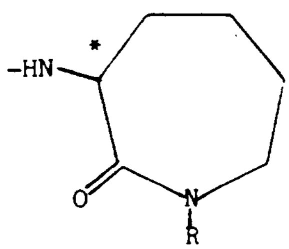

the asymmetric carbon on the moiety Y has S configuration.

**5.** A process for the preparation the amidic derivatives of (R)-glycerylphosphoryl-(S)-serine and of its diacyl derivative of general formula (I)

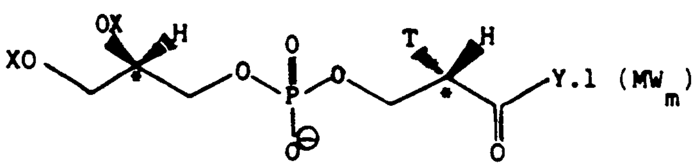

(I)

wherein the asterisk denotes the presence of an asymmetric carbon atom and Y is selected from
A)

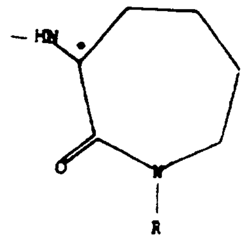

wherein the asterisk denotes the presence of an asymmetric carbon atom and R = H, $CH_2CO_2Me$, $CH_2CONH_2$, $CH_2CH_2OH$, $CH_2CHO$; and

B)

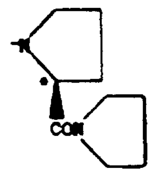

wherein the asterisk denotes the presence of an asymmetric carbon atom;

and wherein X is H or an acylic group like R'CO, where R' is a $C_1$-$C_{20}$ linear or branched alkyl radical, optionally containing one or more ethylenic unsaturations;

and wherein T is $-NH_2$ or $NH_3^+$, M is an alkaline earth metal and W is a pharmaceutically acceptable anion of an inorganic acid, selected from sulphate, chloride and bromide anions, or an anion of an organic acid, selected from acetate and tartrate anions;

and wherein m can be 0, and in this case T is = $-NH_2$ or can be 1 or 2, depending on the valence of the selected W anion, I being equal to zero or to 1/2, provided that when I is zero T is $-NH_3^+$;

comprising the following steps:

a) the derivative of formula (III)

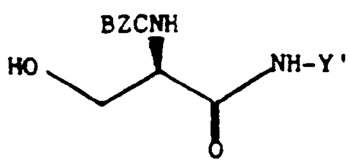

(III)

where Y' has the same meanings as Y, with the following differences:

i) when the derivative of formula (I) is to be obtained in which Y =

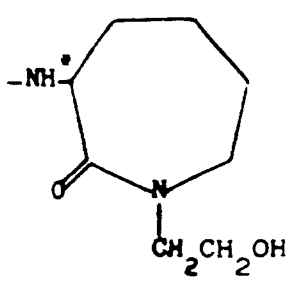

and X = H, Y' has to be =

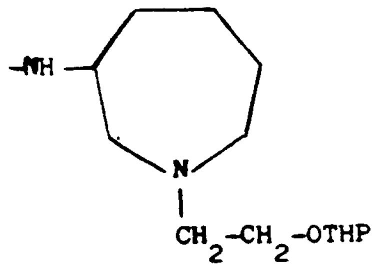

or:

ii) when the derivative of formula (I) is to be obtained in which Y =

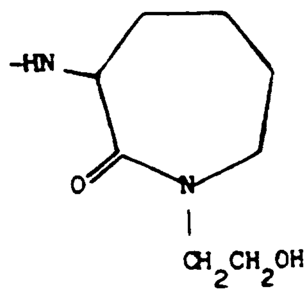

and X = R'CO-, then Y' has to be

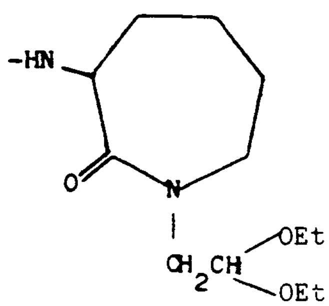

is reacted with $POCl_3$ and (S)-isopropylideneglycerol in 2,6-lutidine and pyridine, thus obtaining the intermediate of formula (IV):

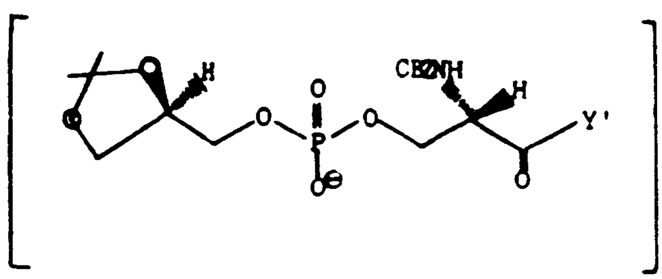

(IV)

which is immediately hydrolized in acid medium and passed through an ($M^{++}$) cation exchanging resin, in order to obtain the intermediate (Va):

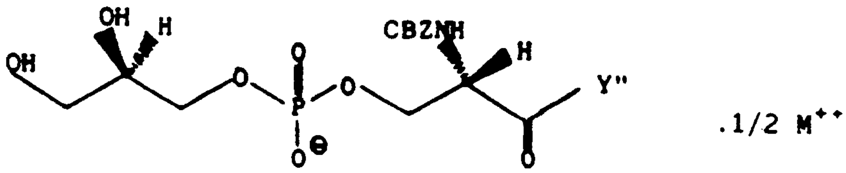

(Va)

wherein Y'' has the same meanings as Y', with the sole difference that when Y', in the product of formula (III), is

i) =

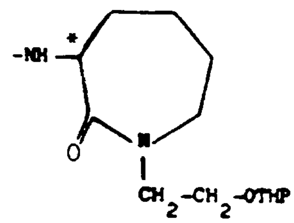

Y'' has to be

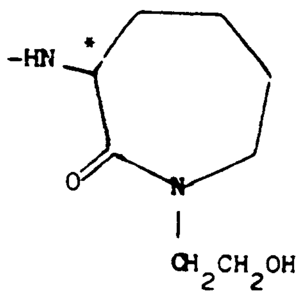

ii) when Y' =

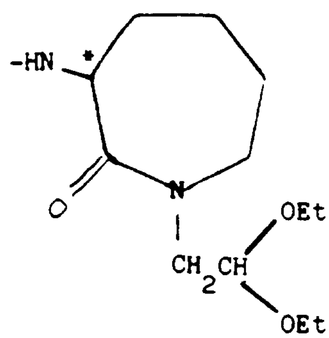

Y'' =

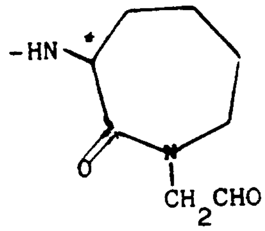

b') the derivative (Va) obtained according to (a) is treated with $H_2$ and Pd/C, in order to obtain the derivative of general formula (I) in which X = H, l = 1/2 and T = $-NH_2$; or

b") the derivative (Va) coming from step (a) is reacted with $R'(CO)_2O$, wherein R' has the meanings hereinabove, in the presence of dicyclohexylcarbodiimide and 4-dimethylamino-pyrrolidine in chloroform solvent, and the obtained product is purified on an ($M^{++}$) ion exchange resin, in order to obtain the intermediate (Vb)

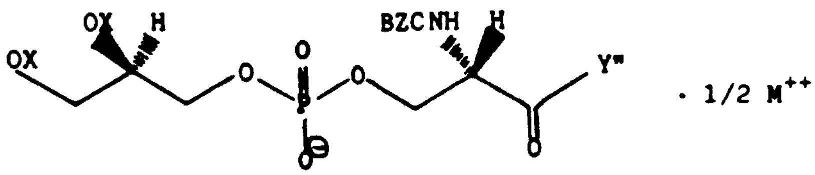

(Vb)

which is successively treated with hydrogen and Pd/C, in order to obtain the derivative of formula (I), where X = R'CO-, l = 1/2, T = $-NH_2$;

c') the derivative of formula (I) is crystallized coming from step (b') or that coming from step (b"), by a treatment with a cation exchange resin in which the cation ($M^{++}$) comes from an alkaline earth metal, thus obtaining the derivative of formula (I) in which l = 1/2, T = $-NH_2$ and m = 1 or 2, depending on the valence of the selected anion.

**6.** A process for the preparation of the compound of formula (III), characterized in that the serine, previously protected at the aminic function by the carbobenzyloxy group (CBZ), of formula (II):

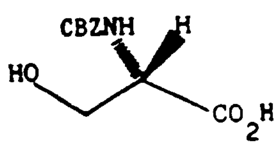

(II)

is reacted with the compound HY', wherein Y' is selected from:

A)

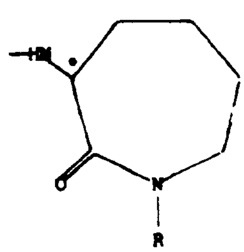

wherein the asterisk denotes the presence of an asymmetric carbon atom in which R = H, $CH_2CO_2Me$, $CH_2CONH_2$, $CH_2OTHP$, $CH_2CH(OEt)_2$; and

B)

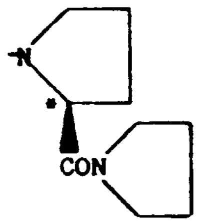

wherein the asterisk denotes the presence of an asymmetric carbon atom.

**7.** A process for the preparation of the derivative (III):

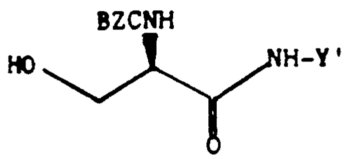

(III)

in which Y' is:

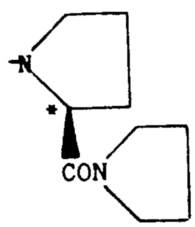

comprising the following steps:

a) (S)-serine, with the aminic function protected by the carbobenzyloxy group of formula (II):

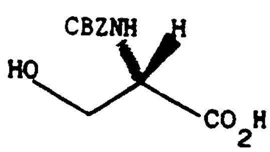

(II)

is reacted with (S)-proline-t-butylester of formula (VI)

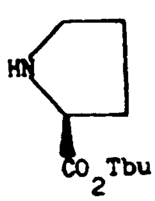

(VI)

thus obtaining the intermediate of formula (VII)

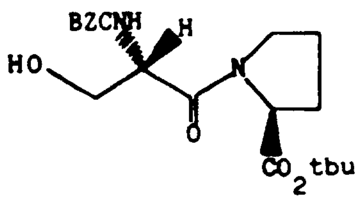

(VII)

b) the intermediate (VII) is successively hidrolized with $CF_3CO_2H$ to derivative (VIII):

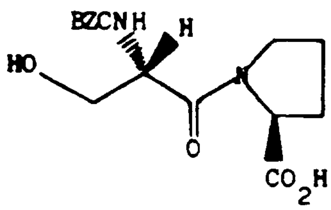

(VIII)

c) the intermediate (VIII) is then treated with dicyclohexylcarbodiimide and pyrrolidine, in order to obtain the desired intermediate (III).

**8.** Pharmaceutical compositions containing, as the active principle, the amidic derivatives of (R)-glycerylphosphoryl-(S)-serine and of its diacyl derivative of general formula (I):

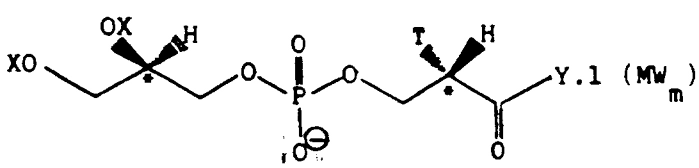

(I)

wherein the asterisk denotes the presence of an asymmetric carbon atom and Y is selected from:

A)

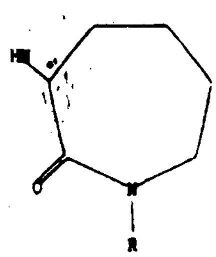

wherein the asterisk denotes the presence of an asymmetric carbon atom and R = H, $CH_2CO_2Me$, $CH_2CONH_2$, $CH_2CH_2OH$, $CH_2CHO$; and

B)

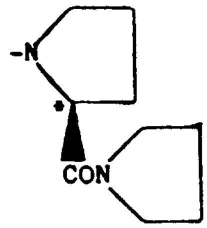

wherein the asterisk denotes the presence of an asymmetric carbon atom;
and wherein X is H or an acylic group like R'CO-, wherein R' a $C_1$-$C_{20}$ linear or branched alkyl radical, optionally containing one or more ethylenic unsaturations;
and wherein T is $-NH_2$ or $NH_3^+$, M is an alkaline earth metal an W is an anion of a pharmaceutical acceptable inorganic acid, selected from sulphate, chloride and bromide anions, or an anion of an organic acid selected from acetate and tartrate anions;
and wherein m may be 0, and in this case t is = $-NH_2$, or may be = 1 or 2, depending on the valence of the selected W anion, l is = zero or 1/2, provided that when l = zero, then T has to be = $-NH_3$; in combination with suitable excipients, diluting agents and/or vehicles.

**9.** The pharmaceutical compositions according to claim 8, for the improvement of the learning and memory processes.

**10.** The pharmaceutical compositions according to claim 8 suitable for oral or parenteral administration.

European Patent Office

# EUROPEAN SEARCH REPORT

Application Number
EP 93 10 2786

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | WO-A-8 705 024 (ISTITUTO CHEMIOTERAPICO DI LODI SPA)<br>* the whole document *<br>--- | 1,8-10 | C07F9/553<br>A61K31/675<br>C07F9/572 |
| D,A | EP-A-0 462 948 (SIGMA-TAU INDUSTRIE FARMACEUTICHE RIUNITE SPA)<br>* the whole document *<br>--- | 1,8-10 | |
| D,A | EP-A-0 268 281 (SUNTORY LIMITED)<br>* the whole document *<br>----- | 1,8-10 | |

TECHNICAL FIELDS SEARCHED (Int. Cl.5)

C07F
A61K

The present search report has been drawn up for all claims

| Place of search | Date of completion of the search | Examiner |
|---|---|---|
| THE HAGUE | 13 MAY 1993 | BESLIER L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)